# EUROPEAN PATENT SPECIFICATION

(11) **EP 2 158 995 B1**
(45) Date of publication and mention of the grant of the patent: **20.06.2012**
(21) Application number: 09250978.5
(22) Date of filing: 31.03.2009
(51) Int. Cl.: B23K 9/013, B23K 9/23, B23K 9/29, B08B 7/00, C23F 4/02, C23G 5/00, F01D 5/00

(54) **Method of cleaning an alloy surface of an airfoil assembly using an electric arc**
Verfahren zum Reinigen einer Legierungsoberfläche einer Schaufelverbindung unter Verwendung eines elektrischen Lichtbogens
Méthode de nettoyage d'une surface alliée d'un assemblage d'ailettes utilisant un arc électrique

(30) Priority: 26.08.2008 US 198357
(43) Date of publication of application: 03.03.2010
(60) Divisional application: 12162254.2
(73) Proprietor: United Technologies Corporation, Hartford, CT 06101 (US)
(72) Inventor: Gero, Peter F., Portland Connecticut 06480 (US); Sousa, Leonard N., Columbia Connecticut 06237 (US)
(74) Representative: Leckey, David Herbert

(56) References cited:
- GB-A- 2 086 293
- GB-A- 2 086 788
- JP-A- 55 128 392
- JP-A- 2003 201 587
- US-A- 3 278 720
- US-A- 4 434 348
- US-A- 4 936 745
- US-A- 5 236 512

## Description

This invention generally relates to a method of cleaning an alloy surface of an airfoil assembly utilizing an electric arc in localized areas of the alloy according to the preamble of claim 1 (see, for example, US 4 936 745).

At least some known alloys exposed to an oxidizing environment at an elevated temperature generally accumulate a layer of oxide or other materials that may degrade the performance and quality of subsequent coating or welding processes. Additional processes are implemented to remove the oxide layer. At least some known methods of removing the oxide layer include the use of an abrasive substance impacted on a surface of the alloy. Because the impact of the abrasive substance will undesirably remove portions of the alloy structure, the alloy cannot be cleaned to the degree necessary with known abrasive grit processes.

Accordingly, it is desirable to develop a device and method for removing oxide layers and other undesired surface contamination from an alloy without undesirably degrading the underlying structural features.

Various devices which use an electric arc for cleaning a surface are disclosed in US-A-3278720, GB-A-2086293, and JP 2003 201587 A.

### SUMMARY OF THE INVENTION

An example disclosed cleaning method utilizes an electric arc within a protective atmosphere to remove undesired scales and oxides.

In accordance with the invention there is provided a method of cleaning an alloy surface of an airfoil assembly as set forth in claim 1.

Accordingly, the disclosed cleaning method provides an effective process for removing undesired material without damaging the underlying structural features.

These and other features of the present invention can be best understood from the following specification and drawings, the following of which is a brief description.

### BRIEF DESCRIPTION OF THE DRAWING

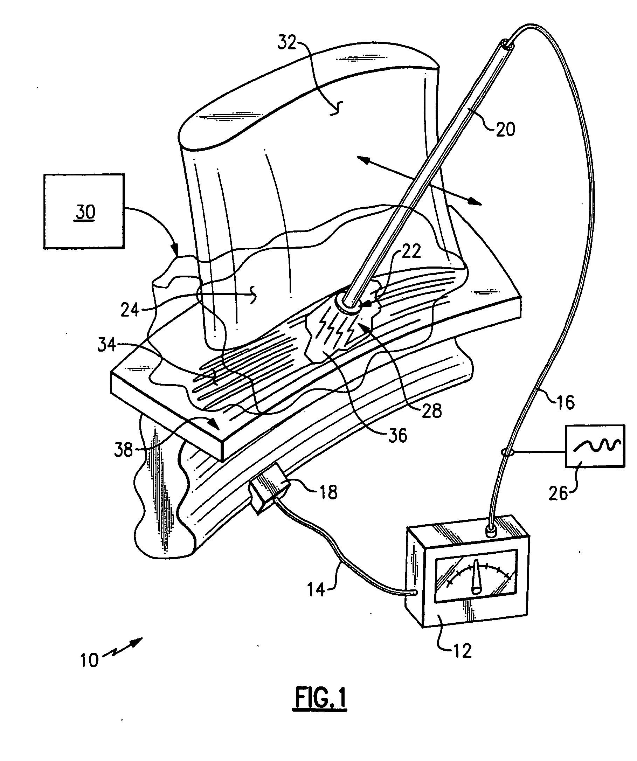

Figure 1 is a schematic representation of an example electric arc cleaning method.

### DETAILED DESCRIPTION OF THE PREFERRED EMBODIMENT

Figure 1 illustrates a cleaning device 10 for removing oxides and other undesired substances from a surface of an alloy. The cleaning device 10 includes an electric circuit including an electric power source 12 that is attached electrically through a first lead 14 to an alloy structure 32 of an airfoil assembly. It should be appreciated that the alloy structure 32 may include any metal structure fabricated from an electrically conductive material.

The first lead 14 is electrically attached by way of a clip 18 to the alloy structure 32. The clip 18 is fabricated to fit the alloy structure 32 and transfer electric energy into the alloy structure 32. A second lead 16 from the power source 12 is electrically connected to a probe 20 that is fabricated from an electrically conductive material to facilitate removal of an undesirable, built up scale 34 by focusing electrical energy on a surface 38 of the structure 32.

The probe 20 includes a probe tip 22 that is fabricated from a tungsten material to provide the desired electric arc and provide a desired longevity. Although the example probe tip 22 is fabricated from tungsten materials, other electrically conductive materials including alloys of tungsten, copper or any other known electrically conductive materials are within the contemplation of this invention. Further, the material selected for use as the probe tip 22 will also include properties desired to provide a desired longevity and durability in view of the electrical energy being utilized and the specific alloy material being cleaned.

During operation of cleaning device 10, energy supplied by the power source 12 generates an electric arc 28 between the probe tip 22 and the surface 38 of the alloy structure 32. In one exemplary embodiment, the power source 12 communicates an alternating electric current 26 to the probe tip 22. When the probe tip 22 is placed close enough to the surface 38 of the alloy structure 32, the structure 32 and the probe tip 22 both receive the alternating electric current 26 to generate an alternating electric arc 28 therebetween. The alternating electric arc 28 communicates electric energy to the surface 38 at a defined interval. The defined interval is determined according to application specific requirements such as the alloy material, the amount of substance on the surface 38 and the amount of electrical power available. The alternating electric arc 28 provides an electric interaction between the probe tip 22 and the surface 38 to facilitate removing the undesired, built up scale 34 and disclose cleaned portions 36.

The probe tip 22 is brought into proximity of the surface 38 where cleaning is to be conducted. The probe tip 22, according to the present invention, moved in sweeping motions over the area desired to be cleaned. The probe tip 22 is swept over the area desired to be cleaned to facilitate visible removal of the scale 34. Once the desired area is visibly cleaned, the probe tip 22 may be moved to other areas of the alloy structure 32 for cleaning.

The alternating electric arc 28 is also generated within a protective atmosphere 24 that includes an inert gas such as, for example, argon. For example, the protective atmosphere 24 is generated by supplying an inert gas from a source of gas 30 to an area that is desired to be cleaned. As a result of the electric current arc 28 within the protective atmosphere 24, the cleaning process facilitates removing low atomic weight oxide-formers by the electrical interaction of the alternating electric arc 28 with the surface 38 of the alloy structure 32.

It should be appreciated by a person of ordinary skill in the art that the power and current supplied by the power source 12 may be adjusted to provide the desired electric arc power that facilitates removal of the scale 34 from the alloy structure 32. It should also be appreciated that the alternating current electric arc 28 may be continually applied with a constant supplied current of a power determined to facilitate removal of scale 34. Further, it should be appreciated that the alternating current 26 from the power source 12 may be pulsed at a desired predetermined interval to generate a pulsing electric arc.

The scale 34 is formed of oxides upon exposure to engine operating conditions or other oxide producing environments. Removal of other forms and compositions of the undesired scales 34 may also be facilitated with the cleaning device 10 to prepare the surface 38 of the alloy structure 32 for subsequent processes such as, but not limited to welding, brazing, coating and other processes that benefit from an oxide free or substantially bare alloy surface. As a result of the exemplary methods and device, the scale 34 removal facilitates subsequent process efficiencies that would not otherwise be available in the presence of oxidative scales and coatings on the surface 38 of the alloy structure 32.

Accordingly, the cleaning method, according to the present invention, provides an effective process for facilitating removal of undesired oxide scale from areas of alloy structures to facilitate improving subsequent processing without damaging the underlying structural features.

Although a preferred embodiment of this invention has been disclosed, a person of ordinary skill in this art would recognize that certain modifications would come within the scope of this invention. For that reason, the following claims should be studied to determine the scope and content of this invention.

## Claims

1. A method of cleaning an alloy surface (38) of an airfoil assembly (32) **characterized by** comprising the steps of:
a) forming a protective atmosphere (24) over the alloy surface (38) of the airfoil assembly (32) for cleaning;
b) generating an electric arc (28) between the alloy surface (38) and the probe (20) within the protective atmosphere (24); and
c) removing material (34) deposited on the surface (38) with an electrical interaction between the probe (20) and the surface (38) by moving the probe in sweeping motions over the alloy surface (38) during the generation of the arc (28) until the surface (38) is visibly clean.

2. The method as recited in claim 1 further including the step:
d) defining a circuit including an electric power source (12) generating an electric current, a first lead (14) in electrical communication between the electric power source (12) and the alloy structure (32), and a second lead (16) in electrical communication with a probe (20).

3. The method as recited in claim 1 or 2, wherein the step (b) includes moving the probe (20) into electrically conductive proximity with the surface (38) of the alloy structure (32).

4. The method as recited in any preceding claim, wherein the electric arc (28) comprises an alternating current electric arc.

5. The method as recited in any preceding claim, wherein the alternating current arc (28) is pulsed at an interval.

6. The method as recited in any of claims 1 to 4, wherein the alternating current electric arc (28) comprises pulses implemented at predetermined intervals.

7. The method as recited in any preceding claim, wherein the electric arc (28) removes oxide scale (34) from the surface.

## Patentansprüche

1. Verfahren zum Reinigen einer Legierungsoberfläche (38) einer Flügelprofilanordnung (32), **gekennzeichnet durch** folgende Schritte:
a) Bilden einer Schutzatmosphäre (24) über der Legierungsoberfläche (38) der Flügelprofilanordnung (32) zur Reinigung;
b) Erzeugen eines elektrischen Lichtbogens (28) zwischen der Legierungsoberfläche (38) und der Sonde (20) innerhalb der Schutzatmosphäre (24);
c) Entfernen von auf der Oberfläche (38) abgelagertem Material (34) mit einer elektrischen Interaktion zwischen der Sonde (20) und der Oberfläche (38), indem die Sonde während der Erzeugung des Lichtbogens (28) in überstreichenden Bewegungen über die Legierungsoberfläche (38) bewegt wird, bis die Oberfläche (38) sichtbar sauber ist.

2. Verfahren nach Anspruch 1, ferner aufweisend folgenden Schritt:
d) Definieren einer Schaltung, die eine Quelle (12) für elektrische Energie, die einen elektrischen Strom erzeugt, eine erste Leitung (14) in elektrischer Kommunikation zwischen der Quelle (12) für elektrische Energie und der Legierungsstruktur (32), und eine zweite Leitung (16) in elektrischer Kommunikation mit einer Sonde (20) aufweist.

3. Verfahren nach Anspruch 1 oder 2, wobei Schritt (b) das Bewegen der Sonde (20) in elektrisch leitfähige Nähe zu der Oberfläche (38) der Legierungsstruktur (32) aufweist.

4. Verfahren nach einem der vorhergehenden Ansprüche, wobei der elektrische Lichtbogen (28) einen elektrischen Wechselstromlichtbogen aufweist.

5. Verfahren nach einem der vorhergehenden Ansprüche, wobei der Wechselstromlichtbogen (28) in einem Intervall gepulst wird.

6. Verfahren nach einem der Ansprüche 1 bis 4, wobei der elektrische Wechselstromlichtbogen (28) Pulse aufweist, die in vorbestimmten Intervallen ausgeführt werden.

7. Verfahren nach einem der vorhergehenden Ansprüche, wobei der elektrische Lichtbogen (28) eine Oxidzunderschicht (34) von der Oberfläche entfernt.

## Revendications

1. Procédé de nettoyage d'une surface alliée (38) d'un assemblage d'ailettes (32) **caractérisé en ce qu'**il comprend les étapes consistant à :
a) former une atmosphère protectrice (24) au-dessus de la surface alliée (38) de l'assemblage d'ailettes (32) à nettoyer ;
b) générer un arc électrique (28) entre la surface alliée (38) et la sonde (20) placée à l'intérieur de l'atmosphère protectrice (24) ; et
c) retirer le matériau (34) déposé sur la surface (38) par interaction électrique entre la sonde (20) et la surface (38) en déplaçant la sonde suivant des mouvements de balayage au-dessus de la surface alliée (38) pendant la génération de l'arc (28), jusqu'à ce que la surface (38) soit visiblement propre.

2. Procédé selon la revendication 1, comprenant en outre l'étape consistant à :
d) définir un circuit comprenant une source d'alimentation en courant électrique (12) générant un courant électrique, un premier fil électrique (14) en communication électrique entre la source d'alimentation en courant électrique (12) et la structure alliée (32) et un second fil électrique (16) en communication électrique avec une sonde (20).

3. Procédé selon la revendication 1 ou 2, dans lequel l'étape (b) comprend le déplacement de la sonde (20) à proximité électriquement conductrice de la surface (38) de la structure alliée (32).

4. A. Procédé selon l'une quelconque des revendications précédentes, dans lequel l'arc électrique (28) comprend un arc électrique de courant alternatif.

5. Procédé selon l'une quelconque des revendications précédentes, dans lequel l'arc de courant alternatif (28) est pulsé à un intervalle donné.

6. Procédé selon l'une quelconque des revendications 1 à 4, dans lequel l'arc électrique de courant alternatif (28) comprend des impulsions générées à intervalles prédéterminés.

7. Procédé selon l'une quelconque des revendications précédentes, dans lequel l'arc électrique (28) permet de retirer la calamine (34) de la surface.
